# EUROPEAN PATENT APPLICATION

(11) **EP 2 057 894 A1**
(43) Date of publication of application: **13.05.2009**
(21) Application number: 08075763.6
(22) Date of filing: 17.09.2008
(51) Int. Cl.: A01G 5/02, B65B 25/02, B65B 27/10

(54) **Method for wrapping at least one elongated object and cutting device suitable for the use therewith**

(30) Priority: 09.11.2007 NL 2000993
(71) Applicant: Koppert Machines B.V., 2681 RW Monster (NL)
(72) Inventor: Koppert, Arie Leendert, 2692 CM 's-Gravenzande (NL)
(74) Representative: van Kooij, Adriaan

(57) **Abstract**

Method for binding at least one elongate object, comprising the steps of: providing an adhesive tape, wherein the adhesive tape is connected at an outer end to an adhesion surface of a cutting device, wherein the cutting device also comprises a cutting member which is rigidly connected to the adhesion surface; moving the adhesive tape in a path of movement against the longitudinal side of the elongate object, wherein the adhesive tape adheres to the elongate object; removing the adhesive tape from the adhesion surface; moving the cutting device out of the path of movement of the adhesive tape; binding the elongate object at least once with the adhesive tape; moving the cutting device back to the adhesive tape; moving the cutting device, wherein the adhesive tape is once again connected to the adhesion surface before being severed by the cutting member.

## Description

The present invention relates to a method for binding at least an elongate object, in particular flower stems. The invention further relates to a cutting device suitable for use in such a method.

Flower processing is an at least substantially automated industry in which, usually for economic reasons, as many operations as possible are performed mechanically. The processing times for the different operations, such as for instance the subdivision into bunches, the cutting of the stems and the bunching of the stems, must herein be as short as possible in order to increase the production efficiency.

There is a particular need for an efficient method of bundling flowers in bunches, wherein the flower stems are held together in a bunch, optionally provided with a plastic wrapper, and then bound with tape. Since this bunch must generally be bound a number of times with tape for the firmness thereof, it will be apparent that such an operation can take a long time.

In the bundling of flower stems a roll of tape is generally bound round a bunch, wherein the roll of tape is mounted on an arm which rotates in a path around the stems. A tensioning device is provided here which must hold the starting strip of the tape tensioned for the purpose of arranging the tape on the flower stems, and a cutting device for cutting the tape once the bunch has been bound. It is important here that the tape adheres fixedly to the tensioning member before being cut, since the tape must otherwise be rearranged manually on the tensioning member

Is an object of the invention to improve the above stated method and to provide an efficient, inexpensive and simple method for binding elongate objects, preferably flower stems.

For this purpose the method for binding at least one elongate object comprises the steps of:
- providing an adhesive tape, wherein the adhesive tape is connected at an outer end to an adhesion surface of a cutting device, wherein the cutting device also comprises a cutting member which is rigidly connected to the adhesion surface;
- moving the adhesive tape in a path of movement against the longitudinal side of the elongate object, wherein the adhesive tape adheres to the elongate object;
- removing the adhesive tape from the adhesion surface;
- moving the cutting device out of the path of movement of the adhesive tape;
- binding the elongate object at least once with the adhesive tape;
- moving the cutting device back to the adhesive tape;
- moving the cutting device such that the adhesive tape is once again connected to the adhesion surface before being severed by the cutting member.

It is advantageous here that the cutting device holds the adhesive tape on the adhesion surface between the binding of the two bunches of flowers, thereby providing a continuous handling process for flowers.

At the start of the binding method as described above the cutting device is situated for this purpose in the path of movement, i.e. the path followed by the adhesive tape during binding of the elongate object. The adhesion surface of the cutting device comprising the adhesive tape preferably extends in the direction of the elongate object. When the tape now adheres to the elongate object by placing of this tape against the elongate object, the cutting device can be detached from the tape and removed from the binding path or path of movement. It is important here that the adhesion of the adhesive tape to the elongate object is sufficiently strong that it does not release from the elongate object, for instance due to the adhesive tape being detached from the cutting device. Placing of the adhesive tape against the elongate object preferably comprises for this purpose of binding at least a quarter of the elongate object. More preferably, placing of the adhesive tape against the elongate object comprises of binding at least half of the elongate object.

In a preferred embodiment of the method according to the invention the removal of the adhesive tape from the adhesion surface comprises of rotating the cutting device. The adhesion surface of the cutting device preferably comprises for this purpose an at least substantially curved surface. Owing to the resistance of the adhesive tape adhered to the elongate object and the rotation of the cutting device the adhesive tape is as it were stripped from the adhesion surface. With continued rotation of the cutting device the outer end of the adhesive tape will eventually be released from the adhesion surface.

The outer end of the adhesive tape herein remains hanging downward from the elongate object. In a further preferred embodiment of the method the removal of the adhesive tape from the adhesion surface also comprises of pressing the outer end of the adhesive tape onto the elongate object by means of a pressing member. Such a pressing member is preferably arranged on the cutting device, wherein, due to the rotation of the cutting device, the pressing member presses the outer end against the elongate object after the adhesive tape is released from the adhesion surface, whereby this outer end will adhere. The specific construction of such a pressing member will be discussed hereinbelow. When the adhesive tape is now removed from the adhesion surface of the cutting device, the cutting device can be taken out of the binding path of the adhesive tape. For this purpose the cutting device preferably comprises a shaft, more preferably a rotation shaft, with which the cutting device can be displaced at least substantially parallel along the longitudinal direction of the elongate object.

After the cutting device has been taken out of the path of movement the elongate object can be further bound. The elongate object is here preferably bound at least once, and more preferably at least twice. Although in a preferred embodiment the path followed by the adhesive tape during binding remains in a plane perpendicularly of the longitudinal direction of the elongate object, it is also possible during the binding for the adhesive tape to be moved in a direction parallel to the longitudinal direction of the elongate object, wherein the binding path comprises a somewhat spiral-shaped path.

In a further preferred embodiment of the method according to the invention the supplying of the adhesive tape comprises of tensioning the adhesive tape between a binding arm and the cutting device, and the binding preferably comprises of rotating the binding arm around the elongate object in the path of movement. For this purpose the binding arm is connected rotatably to the device for the purpose of performing the method according to the invention. The binding arm more preferably extends at least substantially parallel relative to the longitudinal direction of the elongate object during binding, wherein the binding arm follows a circular path round the elongate object while dispensing adhesive tape and binding the elongate object. The binding arm still more preferably comprises at an outer end a connecting arm lying at least substantially perpendicularly of the binding arm, wherein the connecting arm extends between the outer end of the binding arm and a rotation shaft, wherein the rotation shaft lies at least substantially in line with the elongate object. The binding arm and the connecting arm here form an L-shaped configuration.

In a further preferred embodiment of the method according to the invention the supplying of the adhesive tape comprises of supplying the adhesive tape from a stationary supply and guiding the adhesive tape by means of the binding arm, wherein the binding arm unwinds the adhesive tape from the supply. The binding arm is provided for this purpose with guide means, and the guide means preferably comprise guide rollers. In this respect 'stationary' must be understood to mean that the supply, preferably a large roll of adhesive tape, is not situated on the binding arm, whereby it is not necessary to carry the whole supply of adhesive tape round the elongate object for binding thereof. It will be apparent that a larger supply of adhesive tape can hereby be used, whereby it will need to be replaced less frequently, and that the binding arm can hereby be given a less robust form, whereby it is easier to rotate. The supply of adhesive tape is still more preferably arranged on the rotation shaft of the connecting arm, preferably substantially in line with the longitudinal direction of the elongate object, so that the adhesive tape can be unrolled efficiently from the supply during rotation of the binding arm. It is further advantageous to provide the guide rollers with resistance-reducing means, preferably ribs, in order to limit as far as possible the adhesion of the adhesive tape to the guide means. It is moreover advantageous in this respect to guide the adhesive tape over the binding arm such that the side without adhesive is guided over the guide means.

It must be noted that the binding arm and the stationary supply can also be employed without the use of the cutting device according to the invention. The invention is therefore not limited to the combination of said binding arm, stationary supply and the used cutting device.

When the elongate object has been sufficiently bound and the adhesive tape extends substantially in a configuration as in the initial phase of the method, the cutting device is placed once again in the path of the adhesive tape.

It must be noted that the cutting device is preferably movable only in a direction parallel to the longitudinal direction of the elongate object, this so as not to unnecessarily increase the complexity of the device for performing the method. It is important here that, when the cutting device is carried back into the path of the adhesive tape, this adhesive tape extends at least substantially close to the axis along which the cutting device can be moved.

In a further preferred embodiment of the invention a detecting member is provided for detecting the position of the adhesive tape relative to the cutting device. The detecting member is preferably adapted to detect the presence of the adhesive tape at least substantially in the line of the rotation shaft of the cutting device. Depending on the presence of the adhesive tape, which is carried into the rotation axis of the cutting device by the rotation of the binding arm, the cutting device can be carried back into the path of the adhesive tape. By making the return of the cutting device into the path of the adhesive tape dependent on the presence of the adhesive tape in the rotation axis of the cutting device, it is possible to make a correction for the possibly differing thicknesses of different objects for binding. This is because the orientation of the adhesive tape at a determined orientation of the binding arm can vary subject to the thickness of for instance a bunch of flowers. It is moreover advantageous here, from a predetermined orientation of the binding arm or point in time, to co-rotate the cutting device with the orientation of the adhesive tape in order to compensate for the difference in orientation of the adhesive tape as a consequence of the varying thickness of the objects for binding. This ensures that the orientation of the adhesive tape remains substantially constant relative to the cutting device for varying thicknesses of the objects for binding.

In a preferred embodiment of the method for binding an elongate object, the movement of the cutting device in the latter step of the method comprises of rotating the cutting device. The cutting device according to the invention is embodied here such that, during rotation thereof, the adhesive tape is first engaged before it is severed. The adhesion surface and the cutting member are here arranged rigidly, i.e. non-movably, relative to each other on the cutting device. This provides the advantage that no unnecessary moving parts need be arranged in the cutting device, since the rotation and the construction of the cutting device provide for the engagement and subsequent cutting of the adhesive tape.

It will be apparent to the skilled person that such a device with few parts moving relative to each other is advantageous, since moving parts are more likely to malfunction. Particularly in the light of the adhesive applied to a side of the adhesive tape, movable parts can be very disadvantageous since they may impede the relative movement of these parts. It is therefore advantageous that both the cutting member and the adhesion surface are arranged on the cutting device, thereby reducing the complexity of the device for performing the method.

Since the cutting device is situated at a distance from the elongate object, a severed outer end of adhesive tape will remain hanging downward from the elongate object. In order to also have this outer end adhere to the object, in a further preferred embodiment of the method according to the invention the movement of the cutting device also comprises, after the cutting, of pressing the severed adhesive tape onto the elongate object by means of a pressing member. Analogously to pressing of the outer end when the adhesive tape is released from the cutting device, a pressing member, preferably the same pressing member as used in this release, will train the terminal outer end round the elongate object and cause it to adhere.

The cutting device is then preferably rotated back so that the adhesion surface of the cutting device once again extends at least substantially in the direction of the elongate object, wherein the initial position of the cutting device is reached once again and the cycle can begin again, for instance with a subsequent bunch of flower stems for binding.

It must be noted that, although reference is generally made above to an elongate object, this invention relates particularly to the binding of flower stems of a bunch of flowers. A plastic wrapper is generally arranged around this bunch of flowers for protection thereof, wherein the device bunches the flower stems and connects the wrapper to the bunch. Such a device is therefore also referred to as a wrapper taper.

The invention further relates to a cutting device suitable for use in binding at least one elongate object, comprising an adhesion surface adapted to allow adhesion of an adhesive tape and a cutting member adapted to cut the adhesive tape. The cutting device has the special feature here that the cutting device also comprises a rotation shaft adapted to rotate the cutting device, wherein the cutting member and the adhesion surface extend relative to each other such that, during rotation of the device, the adhesive tape adheres to the adhesion surface before being severed by the cutting member. Such a cutting member has the advantage that the cutting and adhesion, and later removal of the adhesive tape can take place without parts moving relative to each other, whereby an efficient and reliable cutting device is provided. The cutting, adhesion and removal of the adhesive tape takes place by rotating the cutting device about the arranged rotation shaft. The rotation shaft preferably extends here in a direction transversely of the normal of the adhesion surface and the direction of the cutting member.

In a preferred embodiment of a cutting device according to the invention the cutting device comprises at least two parts with a passage for the adhesive tape therebetween, wherein the cutting member and the adhesion surface are each arranged on one of the different parts. When the cutting device is carried back into the path of movement for subsequent adhering and severing of the adhesive tape after the elongate object has been bound, the cutting device is preferably carried back such that the adhesive tape extends between each of the parts. The cutting member preferably extends in the passage. When the cutting device is now rotated, the adhesive tape will first adhere to the adhesion surface, wherein the adhesion surface more preferably comprises a protrusion which extends in the passage, and is then cut through. During rotation the two parts each press on the adhesive tape at the position of the adhesion surface and subsequently at the position of the blade. Owing to the rotation the adhesive tape will extend through the passage with a slightly S-shaped curve due to the contact with each of the two parts. Such a movement increases the force exerted perpendicularly of the adhesive tape for the purpose of adhering and subsequently cutting the adhesive tape.

Once the tape has been severed, the cutting device will be rotated further in order to allow the adhesive tape to adhere over a larger area of the adhesion surface for a stronger connection. In a further preferred embodiment of a cutting device according to the invention the adhesion surface comprises for this purpose a curved surface, which will enhance the adhesion of the adhesive tape when further rotated onto the adhesion surface. The curved surface more preferably extends in a circle segment around the rotation shaft of the cutting device. Due to the rotation the adhesive tape will hereby engage at least substantially parallel to the adhesion surface, so improving the connection.

As also stated above, a loose outer end of the adhesive tape will remain hanging from the elongate object when the adhesive tape is severed. In a further preferred embodiment of the cutting device according to the invention the cutting device also comprises a pressing body, wherein this pressing body is adapted to press the adhesive tape onto the elongate object. Owing to the further rotation of the cutting device the pressing member, preferably a brush, will fold the outer end of the adhesive tape round the elongate object. A brush is very suitable for this purpose, since it will not damage these objects, such as flower stems, when the brush brushes over the surface of the object in order to fasten the outer end.

The pressing body more preferably extends outside the passage. More preferably still, the pressing member is connected to the part of the device comprising the cutting member. During the rotation whereby the adhesive tape preferably also adheres better to the adhesion surface, the pressing member will hereby brush the outer end onto the object. The pressing member preferably extends for this purpose on the side of the cutting device opposite the adhesion surface, and more preferably on a side of the part of the cutting member remote from the passage.

When the adhesive tape is sufficiently adhered to the adhesion surface, wherein the adhesive tape extends over substantially the whole adhesion surface, the cutting device will be rotated back, whereby the adhesion surface will extend at least substantially in the direction of the elongate object, after which the device is ready to begin a subsequent binding cycle.

A preferred embodiment according to the invention will be further elucidated with reference to figures shown in the drawing, in which:
- Fig. 1A shows a schematic view of the device for performing the method according to the invention in the starting position;
- Fig. 2A shows a schematic view of the device of fig. 1A in the final position of the method; and
- Figures 3-7 show schematically the different steps of the method according to the invention.

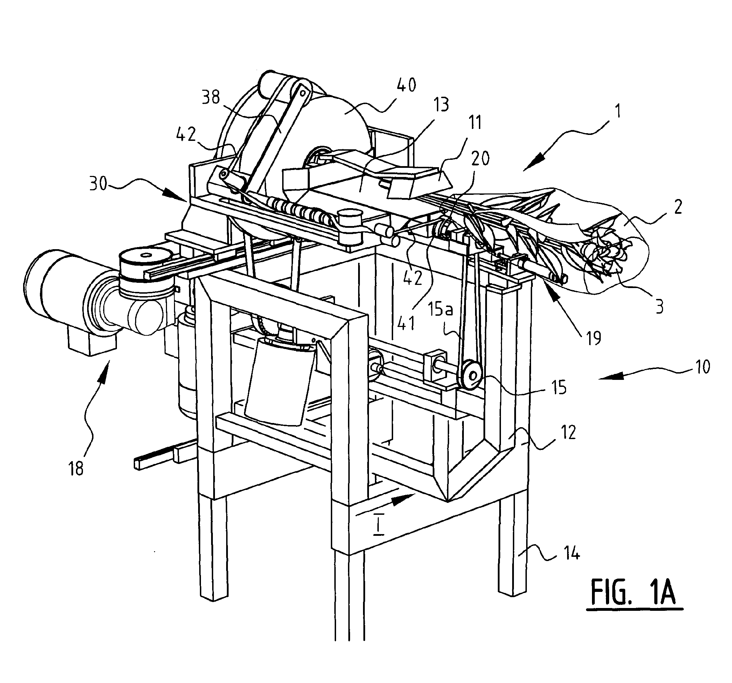

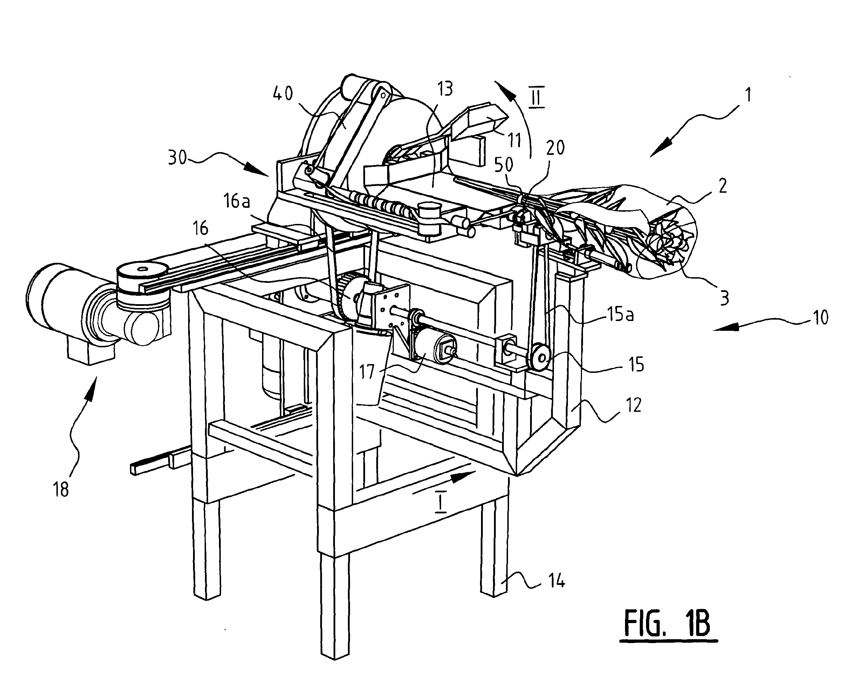

Figures 1A and 1B show a device 10 for binding flower stems 3 with tape 42. Bunches of flowers 1 are here advanced on a conveyor belt (not shown) in a direction I. In order to have the bundling process progress efficiently, device 10 is provided with a frame 14 on which a binding machine 12 is movably arranged. The binding machine 12 can co-displace with the conveyor belt in a direction I so that the process of processing bunches of flowers 1 can run continuously. For co-displacement of binding machine 2 with the direction of movement I of bunches 1 device 10 is provided with drive means 18.

Binding machine 12 is provided with a platform 13 for carrying the outer ends of flower stems 3. For firm holding the machine 12 is provided with a pressing body in the form of a sponge 11 which presses stems 3 firmly against platform 13 without damaging them. It can moreover be advantageous to clamp the bunch 1 in the direction of the flowers beyond platform 13 using clamps (not shown). The machine is further provided with a stationery supply of tape 40 in the form of a large roll. Tape 42 is unrolled from supply 40 by a binding arm 30 which is driven by drive 16 via belt 16a, which can be seen in more detail in figure 1B. Binding arm 30 will be described in more detail below. Also arranged is a counting device 17 which is adapted to count the number of rotations of binding arm 30. Counting device 17 is connected for this purpose to drive 16. Counting device 17 is also adapted to continuously determine the position or orientation of binding arm 30.

Further provided is a cutting device 20 which extends beyond platform 13 so that flower stems 3 lie clear of cutting device 20. Cutting device 20 is rotatable, wherein the rotation is imposed by drive 15 via a belt 15a. Counting device 17 is moreover adapted to count the rotations of cutting device 20 and to determine the orientation thereof, for which purpose counting device 17 is connected to drive 15.

Figure 1A shows device 10 in the starting position of the method according to the invention, wherein bunch 1 has not yet been provided with tape. A wrapper 2 arranged around bunch 3 here lies loosely around bunch 3 and stems 3 of bunch 1 have not yet been connected either. The clamping member provided with sponge 11 is provided so that the bunch can still be held firmly to some extent during the binding. As shown, tape 42 extends transversely of bunch 1 from binding arm 30 and substantially parallel to platform 13. In the final position as shown in figure 1B the orientation of binding arm 30 is the same as in the starting position. Bunch 1 is however now provided with tape 50. Clamping member 11 is here moved in a direction II, whereby bunch 1 is ready for further processing. As can clearly be seen in figure 1B, machine 12 is moved in frame 14 in direction I at a speed corresponding to the speed at which the conveyor belt (not shown) moves the bunches 1 in a direction I.

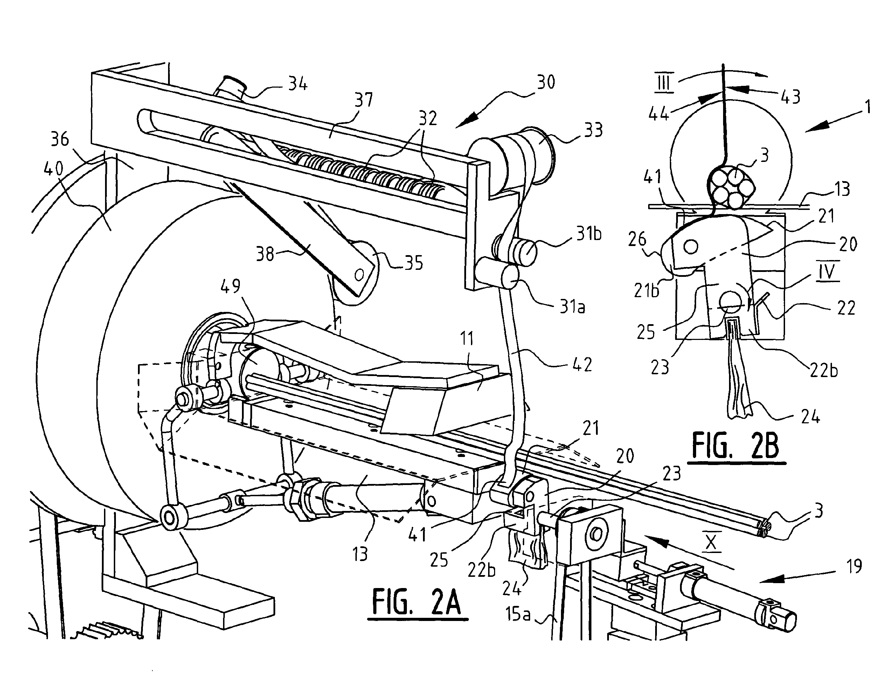

Binding arm 30 is shown in more detail in figure 2A. Binding arm 30 comprises a first arm part 37 and a connecting arm 36 which extend at least substantially perpendicularly of each other. Arm part 37 here extends at least substantially parallel to the longitudinal direction of stems 3. A rotation shaft 49 of connecting arm 36 corresponds with the rotation axis of supply 40 so that arm part 27 rotates about supply 40 and, by means of a guide roller 35 arranged on a transverse arm 38, thus unrolls the tape from supply 40 when binding arm 30 rotates about rotation shaft 49. The removed tape 42 is then fed via a tapering guide roller 34 supplied to rollers 32. Rollers 32 are provided with ribs in order to thus avoid friction between the rollers and tape 42 as much as possible. As the skilled person will appreciate, rollers 34 and 35 can also be provided with ribs. As is perhaps more clearly visible in figure 1A, tape 42 is guided once round rollers 32, this to enable easier guiding of tape 42 over a greater length. It is advantageous here to guide the non-adhesive side 44 of tape 42 over the rollers. Tape 42 is guided between two rollers 31a and 31b via a transversely placed guide roller 33. At least guide roller 31b is here provided with ribs since the adhesive side 43 is guided over this roller, as shown in figure 2B, and the adhesion surface between roller 31b and adhesive side 43 is thus reduced. Roller 31a here engages on a side 44 of the tape not provided with adhesive.

It will be apparent that such a binding arm 30 operates very efficiently for the purpose of binding stems 3 since supply 40 can be placed in stationary position. A supply 40 need here not be carried with arm 30 round flower stems 3, whereby less heavy a drive 16 can suffice for binding arm 30.

Also shown in more detail is cutting device 20, which is adapted to cut and adhere tape 42. Cutting device 20 is constructed from a first part 21b and a second part 22b, which are shown with broken lines in figure 2B and between which is located a passage 25. First part 21b comprises an adhesion surface 21 for adhesion of the tape. As shown in figure 1A, an outer end 41 of tape 42 is arranged in the starting situation on adhesion surface 21. Adhesion surface 21 takes a curved form in order to thus enable a good adhesion and dispensing of tape 42, and in particular outer end 41. A cutting member in the form of a blade 22 is arranged on the second part 22b. Blade 22 extends here in the direction of passage 25. Also arranged on second part 22b is a pressing member in the form of a brush 24. Brush 24 preferably extends in opposite direction to adhesion surface 21 on cutting device 20. Cutting device 20 is further provided with a shaft 23 about which device 20 can be rotated by drive 15 via belt 15a. Also shown are displacing means 19, for instance a piston system, for displacing cutting device 20 in a direction parallel to the length direction of stems 3, this being a direction X.

Although not shown, it is advantageous to arrange a sensor directed in the length direction of stems 3 below platform 13 in order to determine the presence of tape 42 at the position of cutting device 20.

Figures 2A and 2B show in detail the step following the situation as outlined in figure 1A, wherein figure 2B shows the situation of figure 2A in direction X. Where in figure 1A tape 42 has not yet adhered to flower stems 3, tape 42 is arranged on flower stems 3 by the movement of arm 30 in a direction III as shown in figure 2B. When tape 42 has adhered sufficiently strongly to stems 3, as shown in figures 2A and 2B, wherein stems 3 are half-taped, cutting device 20 begins to rotate about shaft 23 in a direction IV. Because tape 42 has adhered sufficiently strongly to stems 3, outer end 41 of the tape will be pulled off the curved adhesion surface 21. The curved surface, in particular on a side 26 of adhesion surface 21, facilitates the release of outer end 41 from cutting device 20.

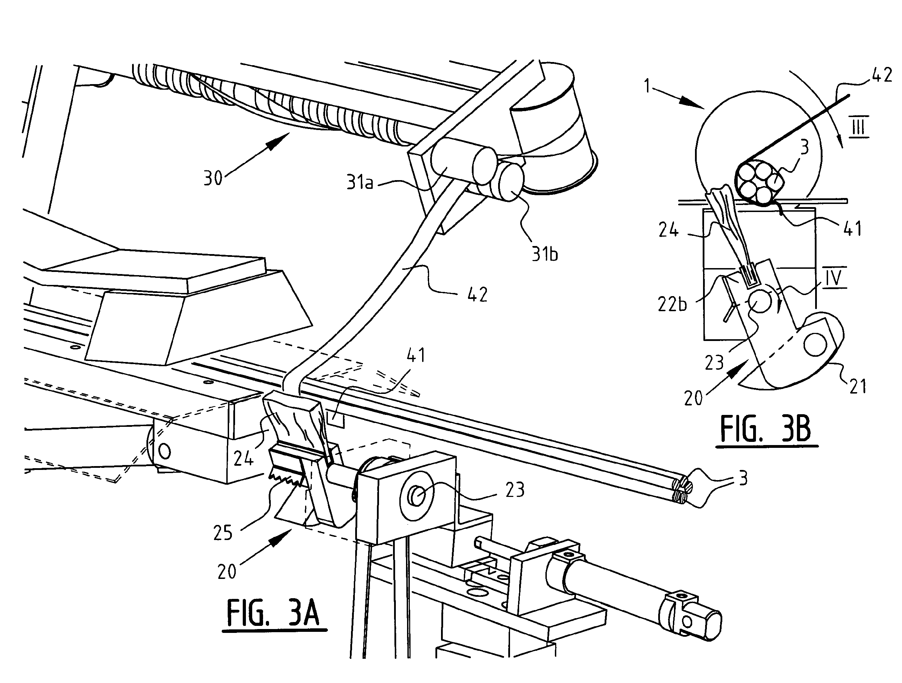

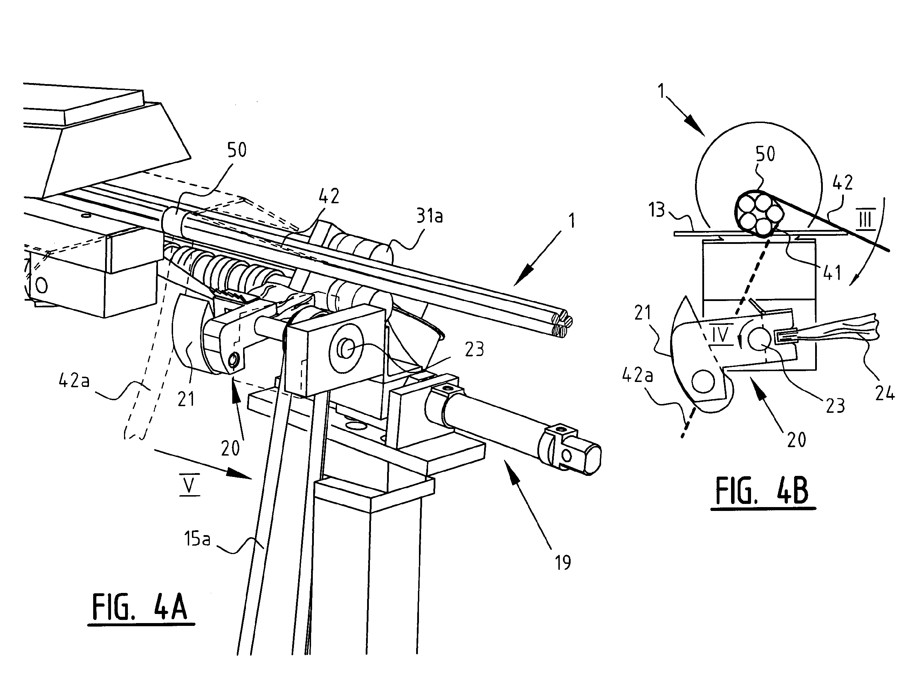

When cutting device 20 has rotated sufficiently far that tape 42 has released from adhesion surface 21, outer end 41 will hang loosely from stems 3, as shown in figures 3A and 3B. However, owing to brush 24 arranged on second part 22b of cutting device 20 and the further rotation thereof about shaft 23 in direction IV, brush 24 will brush outer end 41 against stems 3 as shown in figures 4A and 4B, where outer end 41 is trained round stems 3. It must be noted that binding arm 30 continues to rotate in a direction III so that stems 3 continue to be further taped.

When however stems 3 have been bound almost once, this situation being shown with tape 42a in broken lines, tape 42a will come up against cutting device 20. In order to prevent this, cutting device 20 is displaced in a direction V by displacing means 19 so that cutting device 20 is taken out of the path followed by tape 42, so that tape 42 can be wound freely round stems 3.

As stated above, the timing of the method according to the invention is controlled using counting device 17, which keeps precise track of inter alia the position of binding arm 30, the orientation and the position of cutting device 20, so that device 20 can be taken out of the path of tape 42 in good time, as shown in figures 4A and 4B.

With cutting device 20 out of the path followed by tape 42 due to rotation of binding arm 30, bunch 1 can be bound several times subject to the desired firmness of bunch 1. Bunch 1 is preferably bound at least twice by tape 42 in order to obtain a strong connection with the arranged tape 50.

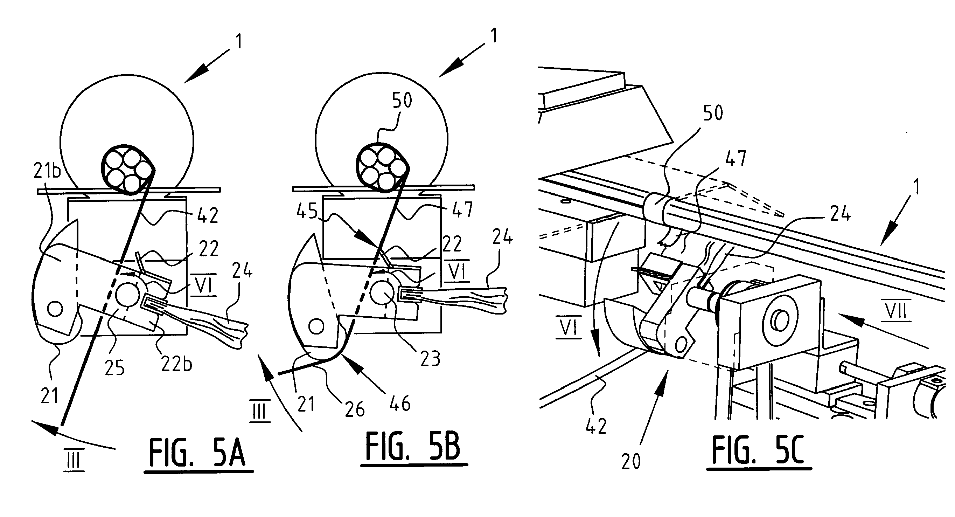

When bunch 1 is sufficiently bound and tape 42 extends in an at least substantially vertical direction as shown in figures 5A and 5B, this being tracked by counting device 17 as stated above, cutting device 20 is once again placed into the path of tape 42 in a direction VII as shown in figure 5C.

In another embodiment the position of tape 42 is detected by the sensor arranged below platform 13. Subject to the presence of tape 42 in the line of shaft 23 or passage 25, cutting device 20 is carried once again into the path of tape 42. This ensures a good insertion of tape 42 between parts 21 and 22 irrespective of the thickness of bunch 1. It is moreover advantageous here to adjust the rotation of cutting device 20 relative to the position of binding arm 30 on the basis of the point in time at which tape 42 passes through the field of vision of the sensor, whereby the orientation of tape 42 through passage 25 is substantially constant for different thicknesses of different bunches 1.

It will be apparent that when device 20 extends other than vertically relative to stems 30, for instance when device 20 is situated to the left or right of the height of platform 13, device 20 is carried back into the path when tape 42 extends in this direction.

Cutting device 20 is rotated here such that tape 42 is taken up in passage 25 between the two parts 21b and 22b, as shown in figure 5A. Cutting device 20 is now rotated in a direction VI about shaft 23, as shown in figure 5B, so that a tape part 46 of tape 42 will adhere to the curved adhesion surface 21. On the other side of passage 25 a tape part 45 will come up against blade 22 due to the rotation of cutting device 20. It is important here that blade 22 and adhesion surface 21 extend relative to each other such that tape part 46 adheres to adhesion surface 21 before tape part 45 is severed using blade 22. It is advantageous here that adhesion surface 21 protrudes to some extent on a side 26 into passage 25, so that the adhesion of tape part 46 is ensured before tape part 45 is severed. Due the continued rotation of device 20 in direction VI, tape 42 will adhere to an increasingly larger area of adhesion surface 21, so that a good connection is achieved between cutting device 20 and tape 42.

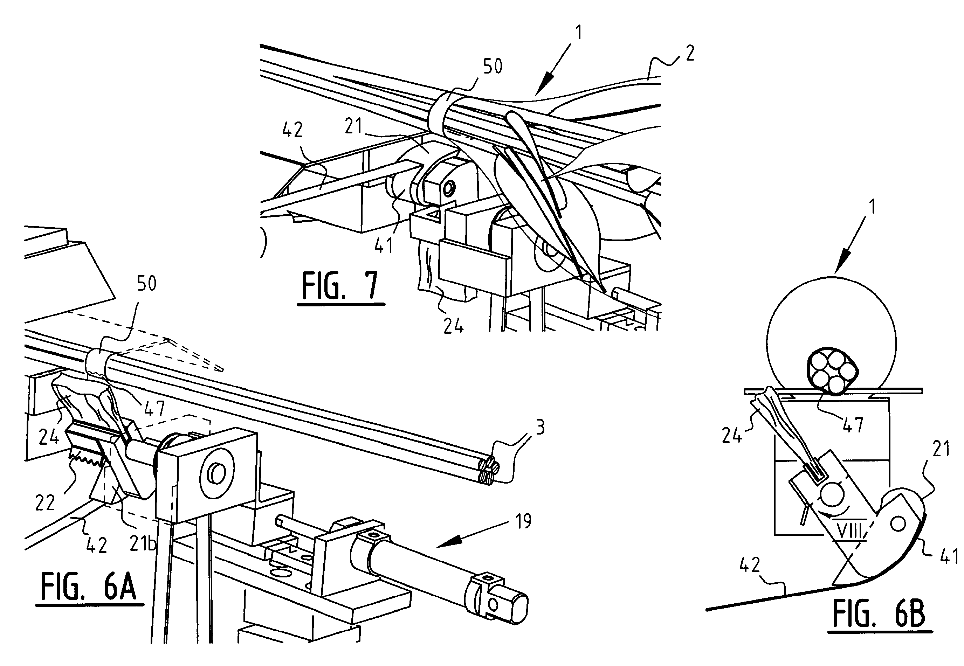

After tape part 45 has been severed, an outer end 47 will remain hanging loosely from stems 3, as shown in figure 5C. Equivalent to the situation as shown in figures 3A and 3B, brush 24 will here also press outer end 47 against stems 3 due to the continuing rotation of device 20, so arriving at the situation as shown in figures 6A and 6B.

The binding of stems 3 is completed with the pressing of outer end 47 onto tape connection 50, so that bunch 1 can be carried further for further processing. By now rotating cutting device 20 back in a direction VIII as shown in figure 6B, the starting situation as shown in figure 7 is reached, this corresponding to the situation as shown in figure 1B. Cutting device 20 is here again oriented such that adhesion surface 21, to which outer end 41 is adhered, extends in the direction of stems 3.

The invention is not limited to the embodiment discussed here, but also extends to other embodiment variants falling within the scope of the appended claims.

## Claims

1. Method for binding at least one elongate object, comprising the steps of:
- providing an adhesive tape, wherein the adhesive tape is connected at an outer end to an adhesion surface of a cutting device, wherein the cutting device also comprises a cutting member which is rigidly connected to the adhesion surface;
- moving the adhesive tape in a path of movement against the longitudinal side of the elongate object, wherein the adhesive tape adheres to the elongate object;
- removing the adhesive tape from the adhesion surface;
- moving the cutting device out of the path of movement of the adhesive tape;
- binding the elongate object at least once with the adhesive tape;
- moving the cutting device back to the adhesive tape;
- moving the cutting device such that the adhesive tape is once again connected to the adhesion surface before being severed by the cutting member.

2. Method as claimed in claim 1, wherein the movement of the cutting device in the last mentioned step comprises of rotating the cutting device.

3. Method as claimed in claim 1 or 2, wherein the removal of the adhesive tape from the adhesion surface comprises of rotating the cutting device.

4. Method as claimed in claim 1, 2 or 3, wherein the supplying of the adhesive tape comprises of tensioning the adhesive tape between a binding arm and the cutting device.

5. Method as claimed in claim 4, wherein the binding comprises of rotating the binding arm around the elongate object in the path of movement.

6. Method as claimed in any of the foregoing claims 1-5, wherein the removal of the adhesive tape from the adhesion surface also comprises of pressing the outer end of the adhesive tape onto the elongate object by means of a pressing member.

7. Method as claimed in any of the foregoing claims 1-6, wherein the movement of the cutting device also comprises, after the cutting, of pressing the severed adhesive tape onto the elongate object by means of a pressing member.

8. Method as claimed in any of the foregoing claims 4-7, wherein the supplying of the adhesive tape comprises of supplying the adhesive tape from a stationary supply and guiding the adhesive tape by means of the binding arm, wherein the binding arm unwinds the adhesive tape from the supply.

9. Cutting device suitable for use in binding at least one elongate object, comprising an adhesion surface adapted to allow adhesion of an adhesive tape and a cutting member adapted to cut the adhesive tape, **characterized in that** the cutting device also comprises a rotation shaft adapted to rotate the cutting device, wherein the cutting member and the adhesion surface extend relative to each other such that, during rotation of the device, the adhesive tape adheres to the adhesion surface before being severed by the cutting member.

10. Cutting device as claimed in claim 9, wherein the cutting device comprises at least two parts with a passage for the adhesive tape therebetween, wherein the cutting member and the adhesion surface are each arranged on one of the different parts.

11. Cutting device as claimed in claim 10, wherein the cutting member extends in the passage.

12. Cutting device as claimed in claim 10 or 11, wherein the adhesion surface comprises a protrusion which extends in the passage.

13. Cutting device as claimed in any of the foregoing claims 9-12, wherein the adhesion surface comprises a curved surface.

14. Cutting device as claimed in any of the foregoing claims 9-13, wherein the cutting device also comprises a pressing body.

15. Cutting device as claimed in claim 14, wherein the pressing body extends outside the passage.

16. Cutting device as claimed in claim 14 or 15, wherein the pressing member is connected to the part of the device comprising the cutting member.

17. Cutting device as claimed in any of the foregoing claims 14-17, wherein the pressing body comprises a brush.
